# EUROPÄISCHE PATENTSCHRIFT

(11) **EP 2 012 035 B1**
(45) Veröffentlichungstag und Bekanntmachung des Hinweises auf die Patenterteilung: **20.03.2013**
(21) Anmeldenummer: 08158016.9
(22) Anmeldetag: 11.06.2008
(51) Int. Cl.: F16D 23/06

(54) **Arretierung**
Stop
Arrêt

(30) Priorität: 05.07.2007 DE 102007031310
(43) Veröffentlichungstag der Anmeldung: 07.01.2009
(73) Patentinhaber: Schaeffler Technologies AG & Co. KG, 91074 Herzogenaurach (DE)
(72) Erfinder: Scharf, Till, 72760, Reutlingen (DE); Spoerl, Marcus, 91126, Rednitzhembach (DE)

(56) Entgegenhaltungen:
- DE-C1- 10 006 347
- FR-A- 2 803 640
- GB-A- 926 702

## Beschreibung

### Gebiet der Erfindung

Die Erfindung betrifft eine Synchronisiereinrichtung mit einer Arretierung und einem Synchronkörper, wobei die Arretierung ein Rastelement und ein Gehäuse aufweist und bezüglich des Synchronkörpers im verbauten Zustand axial verschiebbar ist.

### Hintergrund der Erfindung

In modernen handgeschalteten Getrieben werden Synchronisiereinrichtungen eingesetzt, um auf komfortable Art ein Schalten zwischen den einzelnen Gangstufen zu ermöglichen. Beim Schaltvorgang wird mittels verschiedener Elemente der Synchronisiereinrichtung die Umfangsgeschwindigkeit eines Gangrades der Umfangsgeschwindigkeit der Getriebewelle angepasst und dann eine formschlüssige Verbindung zwischen der Getriebewelle und dem Gangrad hergestellt. Der Synchronkörper ist ein wichtiges Bauelement der Synchronisiereinrichtung. Durch diesen sind die Getriebewelle und eine Schiebemuffe der Synchronisiereinrichtung drehfest miteinander verbunden. Dies erfolgt in der Regel dadurch, dass der Synchronkörper einerseits in Umfangsrichtung formschlüssig über ein an seiner Nabe ausgebildetes Verzahnungsprofil mit der Getriebewelle verbunden ist und andererseits über eine Außenverzahnung seines Muffenträgers die Schiebemuffe an seinem Außendurchmesser entlang der Längsmittelachse der Getriebewelle verschiebbar aufnimmt. Weiterhin dient der Synchronkörper je nach seiner Ausführung als Anschlags- und Führungselement für Synchron- bzw. Reibringe. Außerdem sind viele Synchronkörper mit in gleichmäßigen Abständen an seinem Außenumfang ausgearbeiteten Aufnahmen für Arretierungen wie Rastbolzen und Rastkugeln und für Druckstücke versehen. Die Arretierungen halten die Schiebemuffe in ihrer Mittelstellung, wenn kein Gangrad geschaltet ist. Dazu sind die Arretierungen unter Federvorspannung in eine Rastnut der Schiebemuffe gepresst, oder die Arretierung wirkt auf ein Druckstück, das wiederum in einer Rastnut der Schiebemuffe aufgenommen ist.

In einigen Synchronisiereinrichtungen dienen die in den Aufnahmen des Synchronkörpers angeordneten Druckstücke während eines Schaltvorganges zum Vorsynchronisieren, d.h. zur Bewegung eines jeweils zugeordneten Synchronrings gegen eine Reibfläche des benachbarten Kupplungskörpers oder Zwischenrings bei z. B. Doppelkonussynchronisierungen. Je nach Ausführung der Synchronisiereinheit wird das Druckstück entweder direkt bzw. durch eine oder mehrere Federn oder durch einen vorgespannten Rastbolzen in eine Rastnut der Schiebemuffe vorgespannt. Wird die Schiebemuffe zur Gangwahl axial bewegt, so wird über die innere Kontur ihrer Rastnut das Druckstück axial gegen einen Synchronring geschoben. Der Synchronring wird dadurch gegen die Reibfläche gepresst.

Die Aufnahmen für die Arretierungen müssen in der Regel durch spanabhebende Verfahren am Synchronkörper hergestellt werden. Dadurch wird der Synchronkörper geschwächt, so dass er an diesen Stellen eine verminderte Tragfähigkeit aufweist. In DE 10 2005 018 899 A1 sind eine Arretierung und ein Synchronkörper offenbart, bei denen der beanspruchte Raum für die Aufnahme minimiert ist. Nachteilig an der an sich vorteilhaften Paarung ist, dass besonders eine flache Arretierung während des Betriebes der Synchronisiereinheit durch Erschütterungen aus der Neutralstellung verschoben werden kann, was zu unerwünschtem Ansynchronisieren führen kann.

FR 2 803 640 A1 zeigt eine Arretierung, die als Formfeder an einer Indexierung gesichert ist. Größere Haltekräfte können durch die Formfeder nicht übertragen werden. Weitere Arretierungen von Synchronisiereinrichtungen sind in DE 100 06 347 A1 und in GB 926 702 A offenbart.

### Zusammenfassung der Erfindung

Die Aufgabe der Erfindung ist es daher, eine Synchronisiereinrichtung mit einer Arretierung bereitzustellen, wobei die Arretierung auf einfache Weise in einer Stellposition gegen Erschütterungen gesichert ist.

Diese Aufgabe ist nach dem Gegenstand des kennzeichnenden Teils des Anspruchs 1 dadurch gelöst, dass die Arretierung Mittel aufweist, welche die Arretierung in der Stellposition bis zu einer vorbestimmten Kraft bezüglich des Synchronkörpers fixieren. Dies kann beispielsweise dadurch realisiert sein, dass die Mittel durch einen oder mehrere Zentriernocken gebildet werden, welche am Gehäuse der Arretierung angeordnet sind und in der Stellposition axial gegen den Synchronkörper anschlagen. Die Zentriernocken stehen aus dem Grundkörper der Arretierung nur in geringer Weise hervor, so dass eine axiale Verschiebung nach Überwinden einer vorbestimmten Kraftschwelle möglich ist. Diese Kraftschwelle bestimmt daher auch die Größe bzw. Länge der Zentriernocken.

Eine separate Verliersicherung oder Zentrierungsvorrichtung, beispielsweise in Form von einer oder mehreren Ringfedern, ist daher nicht erforderlich, was die Montage in einer Synchronisiereinrichtung erheblich vereinfacht und Kosten spart.

Der Synchronkörper ist im wesentlichen scheibenförmig ausgebildet und weist eine Außenverzahnung auf. Es können zusätzlich radial außenseitig Aufnahmen angeordnet sein, in welche die Arretierungen eingesetzt sind. Die Aufnahmen sind beispielsweise im Querschnitt T-förmig oder rechteckig. Alternativ besteht der Synchronkörper aus einer massiven Scheibe, die außenseitig mit Verzahnungssegmenten aus Blech versehen ist und zwischen diesen Lücken aufweist, in denen die Arretierungen angeordnet sind. Die zweite Ausführungsform ist besonders geeignet für flache Arretierungen, die nicht oder kaum höher als die Verzahnung des Synchronkörpers bauen.

In einer Ausführungsform weist die Arretierung einen radial orientierten Lappen zum Eingriff in eine Nut des Synchronkörpers auf. Wird die Arretierung bezüglich des Synchronkörpers axial verschoben, so gleitet der Lappen in der Nut, wobei er zweckmäßigerweise einen kleinen Abstand d zum Nutgrund aufweist. Durch eine entsprechende Profilierung des Nutgrundes wirkt beim Verschieben des Lappens ein Widerstand auf den Lappen, wenn der Lappen gegen einen Vorsprung im Nutgrund anschlägt, d. h. wird die Arretierung axial verschoben, so schlägt zunächst der Lappen als Zentrierelement am Nutgrund, der einen Zentrieranschlag bildet, an.

Weist der Vorsprung eine Höhe auf, so dass der Abstand rechnerisch negativ wird, muss gegen das Rastelement bzw. gegen sein Federelement Arbeit geleistet werden, damit eine weitere Verschiebung bewerkstelligt werden kann. Unterscheiden sich Nuttiefe und Länge des Lappens nur um einen geringen Betrag, so lässt sich durch einen erhöhten Kraftaufwand die Arretierung axial weiter verschieben. Dieser Widerstand ist so einzustellen, dass einerseits die axiale Verschiebung der Arretierung keinen großen Kraftaufwand erfordert, andererseits sollte die Arretierung in der Neutralstellung sicher gehalten werden, so dass Vibrationen und eventuelle kleinere Stöße die Arretierung nicht verschieben. Die Verschiebung kann erleichtert werden, indem der Nutgrund nicht eben ausgebildet ist, sondern zu den axialen Seiten hin leicht abfällt.

Anstelle eines radial orientierten Lappens kann sich die Arretierung auch mittels ihres gesamten Gehäuses am Synchronkörper abstützen.

In besonders vorteilhafter Weise ist der Lappen einteilig mit dem Gehäuse der Arretierung ausgebildet. Wird das Gehäuse durch spanlose Umformtechnik hergestellt, so kann der Lappen beim Herstellungsprozess einfach durch Abwinkeln aus dem Gehäuse erzeugt werden. Alternativ dazu lässt sich ein Lappen formschlüssig oder stoffschlüssig mit dem Gehäuse verbinden. Ist das Rastelement aus Kunststoff, so kann der Lappen einteilig mit dem Gehäuse durch einen Spritzvorgang hergestellt werden. Um ein Verkippen zu verringern, ist es vorteilhaft, den oder die Lappen symmetrisch anzuordnen. Wird Genau ein Lappen verwendet, sollte dieser beim verbauten Arretierelement in Umfangsrichtung etwa mittig angeordnet sein.

Es ist nicht erforderlich, dass der Vorsprung im Nutgrund durch ein Kastenprofil gebildet ist, vielmehr ist ein kurviges Profil besonders vorteilhaft, da es zum einen mittels spanloser Umformtechnik besonders gut und kostengünstig erzeugt werden kann und zum anderen die Belastungen der Bauteile gering hält.

Optional ist in der Nut zusätzlich eine Wand angeordnet, welche für den Lappen einen Anschlag darstellt, so dass der Verschiebeweg axial begrenzt ist. In bevorzugter Weise ist der Anschlag endseitig angeordnet, so dass er axial nicht hervorsteht und gleichzeitig einen maximalen Verschiebeweg zulässt.

Die Zentriernocken lassen sich besonders einfach fertigen, indem sie als Durchstellungen im aus Blech bestehenden Gehäuse der Arretierung ausgebildet sind.

Es ist zweckmäßig, die Form der Zentriernocken an die Form der Rampenkontur der Nut anzupassen, um einen harmonischen Kraftverlauf und eine sichere Funktion zu gewährleisten. Durch entsprechende Rampenkonturen bzw. Formgebung der Zentriernocken können sowohl linienförmige als auch flächenartige Pressungen an den den Flanken realisiert werden.

Um auch bei Fehlbedienungen oder schräger Krafteinleitung eine sichere Funktion zu gewährleisten, hat es sich als vorteilhaft erwiesen, die Arretierung mit mehreren Zentriernocken zu versehen, die in der Neutralstellung den Synchronkörper beidseitig flankieren.

### Kurze Beschreibung der Zeichnungen

Die Erfindung ist nachfolgend anhand von Ausführungsbeispielen näher erläutert. Es zeigen:
- Figur 1: eine Synchronisiereinrichtung gemäß dem Stand der Technik,
- Figur 2: eine Schrägansicht der Erfindung mit einer Arretierung in einem Synchronkörper,
- Figur 3: eine Schrägansicht des Synchronkörpers nach Figur 2,
- Figur 4: eine vergrößerte perspektivische Ansicht der Arretierung nach Figur 2,
- Figur 5: eine rückseitige, perspektivische Ansicht der Arretierung gemäß Figur 2,
- Figur 6: einen weiteren erfindungsgemäßen Synchronkörper und
- Figuren 7-8: jeweils einen Längs- bzw. Querschnitt von drei erfindungsgemäßen Synchronkörpern im Bereich der Nuten.

### Detaillierte Beschreibung der Zeichnungen

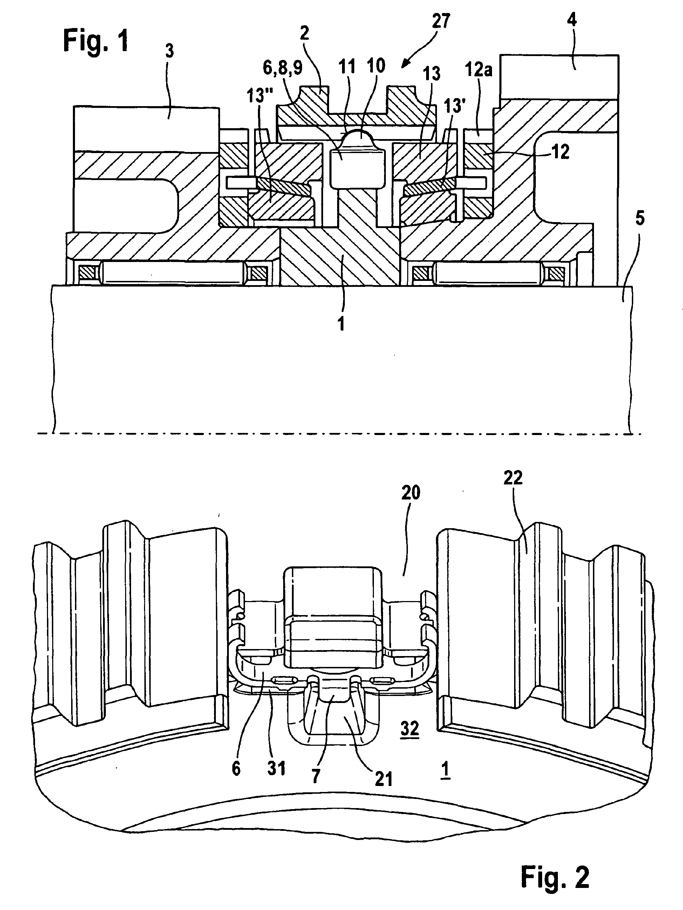

Figur 1 zeigt eine Synchronisiereinrichtung 27 mit einem Synchronkörper 1 und einer Schiebemuffe 2 zum wahlweisen Kuppeln von Gangrädern 3 und 4. Die Gangräder 3 und 4 sind drehbar, aber längs fest auf einer Schaltwelle 5 gelagert. Der Synchronkörper 1 sitzt verdrehfest sowie längs fest auf der Schaltwelle 5 und trägt auf seinem Außenumfang die Schiebemuffe 2. Die Schiebemuffe 2 ist mittels einer Verzahnung drehfest zu dem Synchronkörper 1 und damit zur Schaltwelle 5 wahlweise in Richtung eines der Gangräder 3 oder 4 verschiebbar auf dem Synchronkörper 1 angeordnet. An jeder Seite des Synchronkörpers 1 ist längs zwischen diesem und dem Gangrad 3, 4 jeweils ein Satz Synchronringe angeordnet.

Der Synchronkörper 1 nimmt an seinem Umfang mehrere Arretierungen 6 auf, wobei eine Arretierung 6 hier nur schematisch dargestellt und in den nachfolgenden Figuren detaillierter beschrieben ist. Die Arretierung 6 ist als ein Druckstück 9 ausgelegt und verrastet mit ihrem Rastelement 8 an der Schiebemuffe 2 in ihrer neutralen Stellposition. In der neutralen Stellposition stützt sich die Arretierung 6 an dem Synchronkörper 1 radial ab und spannt mit einem Deckel 10 gegen die Schiebemuffe 2 vor. Dabei greift das Rastelement 8 mit seinem Deckel 10 in eine Rastvertiefung 11 ein.

Wird die Schiebemuffe 2 axial verschoben, greift sie in eine Kupplungsverzahnung 12a einer mit dem Gangrad 4 fest verbundenen Kupplungsscheibe 12 ein. Die Schaltwelle 5 ist über den Synchronkörper 1 und die Schiebemuffe 2 mit dem Gangrad 4 drehfest verbunden, wobei der dem Gangrad 4 zugeordnete Gang geschaltet ist. Bei der Schaltbewegung der Schiebemuffe 2 in die geschaltete Position nimmt die Schiebemuffe 2 das in die Rastvertiefung 11 eingreifende Rastelement 8 der Arretierung 6 längs mit und verschiebt es gegen den äußeren Synchronring 13. Damit ist der Prozess der Vorsynchronisation eingeleitet.

Die weiter in Richtung der Kupplungsverzahnung 12a bewegte Schiebemuffe 2 zwingt den Deckel 10 des sich an dem äußeren Synchronring 13 abstützenden Druckstücks 9 aus der Rastvertiefung 11. Der Deckel 10 federt dabei radial ein. Beim Lösen des Ganges bewegt sich die Schiebemuffe 2 aus dieser Stellung zurück. Dabei greift der mit Vorspannung an der Schiebemuffe 2 anliegende Deckel 10 erneut in die Rastvertiefung 11 ein.

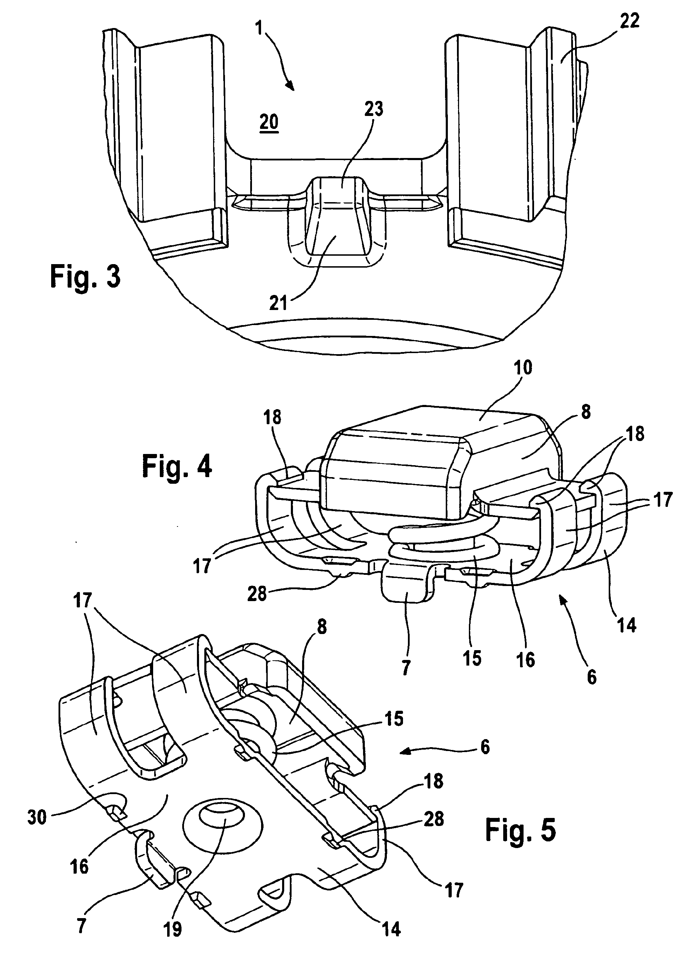

Figuren 4 und 5 zeigen die Arretierung 6. Die Arretierung 6 besteht aus einem Gehäuse 14 und einem Rastelement 8. Das Rastelement 8 weist einen Deckel 10 auf, welcher gegenüber dem Gehäuse 14 durch ein Federelement 15 vorgespannt ist. Das Gehäuse 14 ist im wesentlichen wannenförmig ausgebildet. Es weist neben einem Boden 16 von diesem abgewinkelte Halterungen 17 auf, welche über Vorsprünge 18 den Deckel 10 innerhalb des Gehäuses 14 fixieren. Im unbelasteten Zustand ist die Federkraft so groß, dass sie den Deckel 10 gegen die Vorsprünge 18 presst, so dass der Deckel 10 sicher in dem Gehäuse 14 gehalten ist. Der Boden 16 weist mittig einen durchgestellten hohlen Ansatz 19 auf, der als Dornfortsatz das Federelement 15 sicher führt, so dass es nicht verkippen kann. Die Arretierung 6 weist ferner Lappen 7, 7' auf, welche in nahezu rechtem Winkel von dem Boden 16 abgewinkelt sind. Seitlich der Lappen 7, 7' sind Zentriernocken 28 angeordnet, die aus dem Grundkörper des Gehäuses 14 durchgestellt sind. Die Zentriernocken 28 weisen zur Mitte der Arretierung 6 orientiert eine Rampe 30 auf. Die Rampe 30 ermöglicht im Zusammenspiel mit einer Gegenrampe 31 am Synchronkörper 1 eine größere Anlagefläche, so dass beim Durchschalten der Neutralstellung keine ruckartige Weiterbewegung erfolgt, was die Lebensdauer und den Schaltkomfort erhöht.

Die Figuren 2 und 3 zeigen jeweils einen Ausschnitt eines erfindungsgemäßen Synchronkörpers 1, dessen Außenverzahnung 22 durch eine Aufnahme 20 unterbrochen ist, wobei in der Aufnahme 20 für die Arretierung 6 eine Nut 21 angeordnet ist. Die Nut 21 ist axial einseitig geöffnet (in den Figuren nach vorn orientiert). Auf der axial gegenüberliegenden Seite wird sie endseitig durch einen Anschlag 23 in Form einer Wand verschlossen. Gemäß Figur 2 ist in der Synchronisiereinrichtung 27 die Arretierung 6 so in dem Synchronkörper 1 angeordnet, dass der Lappen 7 in die Nut 21 eingreift und in der Neutralstellung die Zentriernocken 28 den scheibenförmigen Teil 32 des Synchronkörpers beidseitig zwischen sich nehmen. Der scheibenförmige Teil 32 kann angefast sein, um eine Gegenrampe 31 zu bilden. Um eine genügende Stabilität zu erreichen, ist es vorteilhaft, dass zwei oder mehrere Zentriernocken 28 auf jeder Seite die Arretierung 6 zentrieren.

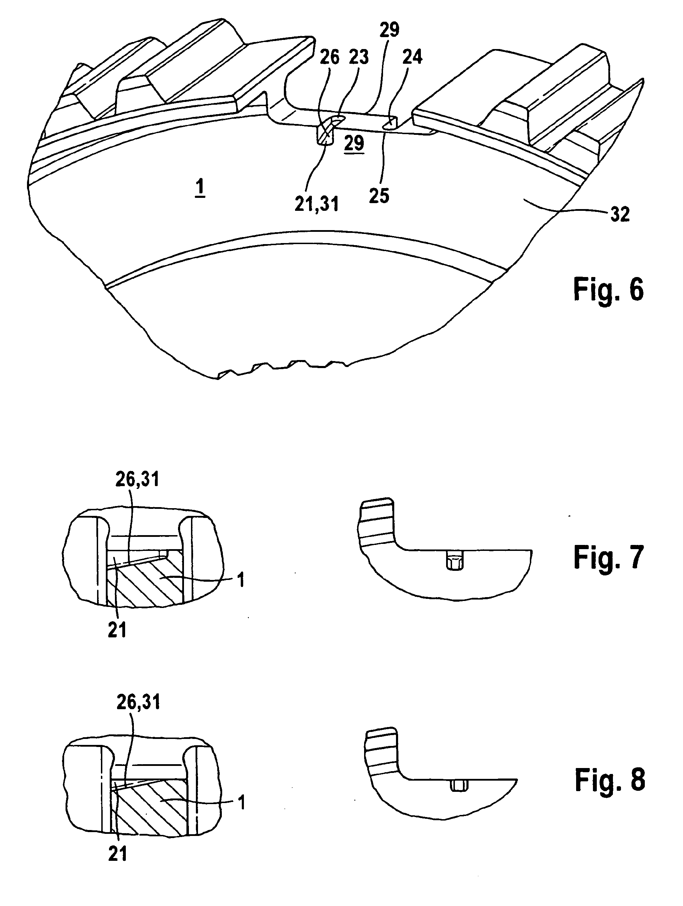

Figur 6 zeigt einen Synchronkörper 1, der zwei Nuten 21, 24 aufweist. Die erste Nut 21 und die zweite Nut 24 sind axial zu verschiedenen Seiten durch einen ersten Anschlag 23 bzw. einen zweiten Anschlag 25 verschlossen. Eine radial in diesem Synchronkörper 1 eingesetzte Arretierung 6 mit zwei Lappen 7, 7', welche jeweils in eine Nut 21, 14 eingreifen und damit versetzt an der Arretierung angeordnet sind, lässt sich in beide Richtungen axial verschieben. Sie wird durch zwei zueinander versetzt angeordnete Anschläge 23, 25 in ihrem Verschiebeweg begrenzt. Die Lappen 7, 7' können gleichzeitig auch die Funktion der Zentriernocken 28 übernehmen, wenn die Nuten 21, 24 einen Nutgrund 26 aufweisen, der als Rastgebirge ausgebildet ist. In den Varianten nach den Figuren 7 und 8 ist der Nutgrund 26 zur Mitte des Synchronkörpers 1 hin jeweils ansteigend und im Querschnitt konvex. Wird in diesem Fall eine Arretierung aus der Neutralstellung axial verschoben, so trifft der in die Nut 21 eingreifende Lappen 7 auf den Nutgrund 26, so dass ein weiteres Verschieben nur durch Überwindung eines gewissen Widerstandes möglich ist. Dieser Effekt tritt bei einem Synchronkörper 1 gemäß Figur 6 in beiden Richtungen auf. Ist die Arretierung 6 in Neutralstellung, so reichen beispielsweise durch Vibrationen eingebrachte Kräfte nicht aus, die Arretierung 6 vollständig zu verschieben. Ein unerwünschtes Ansynchronisieren wird somit vermieden. Erst die durch den Bediener oder einen Motor aufgebrachte Kraft kann die Arretierung 6 vollständig in die Position verschieben, in der der zugeordnete Gang geschaltet ist.

### Bezugszahlenliste

- 1: Synchronkörper
- 2: Schiebemuffe
- 3: Gangrad
- 4: Gangrad
- 5: Schaltwelle
- 6: Arretierung
- 7,7': Lappen
- 8: Rastelement
- 9: Druckstück
- 10: Deckel
- 11: Rastvertiefung
- 12: Kupplungsscheibe
- 12a: Kupplungsverzahnung
- 13, 13': Synchronring
- 13": Synchronring
- 14: Gehäuse
- 15: Federelement
- 16: Boden
- 17: Halterung
- 18: Vorsprung
- 19: Ansatz
- 20: Aufnahme
- 21: erste Nut
- 22: Außenverzahnung
- 23: erster Anschlag
- 24: zweite Nut
- 25: zweiter Anschlag
- 26: Nutgrund
- 27: Synchronisiereinrichtung
- 28: Zentriernocken
- 29: Flanke
- 30: Rampe
- 31: Gegenrampe
- 32: scheibenförmiger Teil

## Patentansprüche

1. Synchronisiereinrichtung (27) mit einer Arretierung (6), wobei die Arretierung (6) ein Rastelement (8) zum Verrasten in einer Stellposition sowie ein Gehäuse (14) aufweist und bezüglich eines Synchronkörpers (1) axial verschiebbar ist, und die Arretierung (6) Mittel (28) aufweist, welche die Arretierung (6) in der Stellposition bis zu einer vorbestimmten Kraft bezüglich des Synchronkörpers (1) fixieren, **dadurch gekennzeichnet, dass** die Mittel als ein oder mehrere Zentriernocken (28) ausgebildet sind, welche am Gehäuse (14) angeordnet sind und dass das Rastelement (8) gegen ein Rastprofil einer Schiebemuffe (2) vorgespannt ist, dass die Stellposition die Neutralstellung ist und dass in der Neutralstellung die Zentriernocken (28) den Synchronkörper (1) axial flankieren.

2. Synchronisiereinrichtung nach Anspruch 1, **dadurch gekennzeichnet, dass** die Zentriernocken (28) aus dem Gehäuse (14) durchgestellt sind.

3. Synchronisiereinrichtung nach Anspruch 2, **dadurch gekennzeichnet, dass** die Arretierung (6) aus Blech ausgebildet ist, wobei das Gehäuse (14) der Arretierung (6) einen Boden (16) aufweist und die Zentriernocken (28) in Druckrichtung des Rastelements (8) orientiert sind.

4. Synchronisiereinrichtung nach Anspruch 1, **dadurch gekennzeichnet, dass** in der Neutralstellung der Synchronkörper (1) beidseitig von jeweils zwei Zentriernocken (28) flankiert ist.

5. Synchronisiereinrichtung nach Anspruch 1, **dadurch gekennzeichnet, dass** die Zentriernocken (28) in einer geschalteten Stellung in Nuten (21) des Synchronkörpers (1) eingreifen.

## Claims

1. Synchronizing device (27) with a stop (6), the stop (6) having a latching element (8) for latching in a set position and also a housing (14) and being displaceable axially with respect to a synchronous body (1), and the stop (6) having means (28) which fix the stop (6) in the set position with respect to the synchronous body (1) up to a predetermined force, **characterized in that** the means are designed as one or more centring bosses (28) which are arranged on the housing (14), and **in that** the latching element (8) is prestressed against a latching profile of a sliding sleeve (2), **in that** the set position is the neutral position, and **in that**, in the neutral position, the centring bosses (28) flank the synchronous body (1) axially.

2. Synchronizing device according to Claim 1, **characterized in that** the centring bosses (28) are protruded out of the housing (14).

3. Synchronizing device according to Claim 2, **characterized in that** the stop (6) is formed from sheet metal, the housing (14) of the stop (6) having a bottom (16), and the centring bosses (28) being oriented in the direction of pressure of the latching element (8).

4. Synchronizing device according to Claim 1, **characterized in that**, in the neutral position, the synchronous body (1) is flanked on each of its two sides by two centring bosses (28).

5. Synchronizing device according to Claim 1, **characterized in that**, in a switched position, the centring bosses (28) engage in grooves (21) of the synchronous body (1).

## Revendications

1. Dispositif de synchronisation (27) comprenant un arrêt (6), l'arrêt (6) comprenant un élément d'encliquetage (8) pour l'encliquetage dans une position de réglage ainsi qu'un boîtier (14) et étant déplaçable axialement par rapport à un moyeu de synchroniseur (1), et l'arrêt (6) comprenant des moyens (28) qui fixent l'arrêt (6) par rapport au moyeu de synchroniseur (1) dans la position de réglage jusqu'à une force prédéfinie, **caractérisé en ce que** les moyens sont réalisés sous forme d'un ou plusieurs ergots de centrage (28) qui sont disposés sur le boîtier (14), **en ce que** l'élément d'encliquetage (8) est précontraint contre un profil d'encliquetage d'un manchon coulissant (2), **en ce que** la position de réglage est la position neutre et **en ce que** les ergots de centrage (28) flanquent axialement le moyeu de synchroniseur (1) dans la position neutre.

2. Dispositif de synchronisation selon la revendication 1, **caractérisé en ce que** les ergots de centrage (28) font saillie hors du boîtier (14).

3. Dispositif de synchronisation selon la revendication 2, **caractérisé en ce que** l'arrêt (6) est réalisé en tôle, le boîtier (14) de l'arrêt (6) comprenant un fond (16) et les ergots de centrage (28) étant orientés dans la direction de pression de l'élément d'encliquetage (8).

4. Dispositif de synchronisation selon la revendication 1, **caractérisé en ce que**, dans la position neutre, le moyeu de synchroniseur (1) est flanqué des deux côtés par deux ergots de centrage respectifs (28).

5. Dispositif de synchronisation selon la revendication 1, **caractérisé en ce que** les ergots de centrage (28) viennent en prise dans des rainures (21) du moyeu de synchroniseur (1) dans une position enclenchée.
